Europäisches Patentamt

European Patent Office

Office européen des brevets

(11) Veröffentlichungsnummer: **0 362 642**
**A2**

## (12) EUROPÄISCHE PATENTANMELDUNG

(21) Anmeldenummer: **89117592.9**

(51) Int. Cl.⁵: **F16J 15/34**

(22) Anmeldetag: **22.09.89**

(30) Priorität: **07.10.88 DE 3834214**

(43) Veröffentlichungstag der Anmeldung:
**11.04.90 Patentblatt 90/15**

(84) Benannte Vertragsstaaten:
**BE DE FR GB IT NL**

(71) Anmelder: **Feodor Burgmann Dichtungswerke
GmbH & Co.
Äussere Sauerlacher Strasse 6-8
D-8190 Wolfratshausen 1(DE)**

(72) Erfinder: **Nosowicz, Josef Dr.-Ing.
Richard-Wagner-Strasse 1
D-8192 Geretsried(DE)**
Erfinder: **Kollinger, Rudolf
Richard-Wagner-Strasse 10
D-8034 Germering(DE)**

(74) Vertreter: **Empl, Karl et al
Patentanwälte Dipl.-Ing. K. Empl Dipl.-Ing.,
Dipl.-Wirtsch.-Ing. K. Fehners
Schumannstrasse 2
D-8000 München 80(DE)**

(54) **Dichtung.**

(57) Eine gasgeschmierte Gleitringdichtung, deren drehfest und gegen Federn (35) in Axialrichtung verschieblich an einer abzudichtenden Wandung (4) gehaltener Gleitring (20) mit seiner Gleitfläche (22) an der Gleitfläche (21) eines Gegenrings (19) anliegt. Der Gegenring (19) ist unbeweglich und dichtend auf einer Zwischenhülse (10) befestigt, die ihrerseits auf der abzudichtenden Welle (2) mittels Wälzlager (16) drehbar gelagert und gegen die Welle mittels einer dynamischen Dichtungseinrichtung (15) abgedichtet ist. Zwischen der Welle (2) und der Zwischenhülse (10) ist ferner ein Freilauf (17) angeordnet, der die Welle bei Umlauf in ihrer regulären Drehrichtung (1′) mit der Zwischenhülse (10) kuppelt, wodurch der Gegenring (19) angetrieben wird und in seiner Gleitfläche (21) angeordnete Fördernuten (24) aus dem abzudichtenden Raum (6) Gas zwischen die beiden Gleitflächen (21, 22) pumpen, das deren Trennung bewirkende Druckpolster bildet. In der entgegengesetzten Drehrichtung (2″) entkuppelt der Freilauf (17), wodurch vermieden wird, daß die Gleitflächen (21, 22) eine umgekehrt zu derjenigen bei der regulären Drehrichtung (1′) erfolgende Relativbewegung ausführen können, bei welcher Gas zwischen den Gleitflächen abgesaugt würde und durch die stark erhöhte Reibung die Gleitflächen schnell zerstört würden.

FIG. 1

## DICHTUNG

Die Erfindung betrifft eine Dichtung für eine im regulären Betrieb in einer ersten Drehrichtung umlaufenden Welle, welche durch eine Wandung geführt ist, die einen Raum höheren Drucks von einem Raum niedrigeren Drucks trennt, mit wenigstens einer in der ersten Drehrichtung die Dichtfunktion übernehmenden Dichtungsbaugruppe, umfassend jeweils einerseits ein erstes Dichtungsglied, das an der Welle oder einem daran festen Bauteil in Radialrichtung und in mindestens einer Axialrichtung abgestützt ist, mit der Welle bzw. dem Bauteil über eine erste drehmomentübertragende Einrichtung verbunden ist und gegen die Welle durch eine erste Hilfsdichtungsanordnung abgedichtet ist und andererseits ein zweites Dichtungsglied, das an der Wandung oder einem daran festen Bauteil in Radialrichtung und in mindestens einer Axialrichtung abgestützt ist, mit der Wandung bzw. dem Bauteil über eine zweite drehmomentübertragende Einrichtung verbunden ist und gegen die Wandung bzw. das Bauteil durch eine zweite Hilfsdichtungsanordnung abgedichtet ist, wobei die beiden Dichtungsglieder an einem die relative Drehbewegung aufnehmenden Dichtspalt unmittelbar oder über eine trennende dünne Mediumschicht aneinander liegen.

Wellen, welche im regulären Betrieb nur in einer vorgegebenen Drehrichtung umlaufen, können unter besonderen Betriebsbedingungen die entgegengesetzte Drehrichtung annehmen. Ein Beispiel dafür sind Kompressoren, die von einem Motor stets in einer Drehrichtung angetrieben werden. Ist der Motor abgeschaltet und wird der Kompressor auf seiner Niederdruckseite mit Druck beaufschlagt, so wird dieser zu einem Motor, der die Welle entgegengesetzt zu deren regulären Drehrichtung antreibt. Der Wellenumlauf in dieser entgegengesetzten Drehrichtung, auch wenn er üblicherweise nur relativ kurze Zeit dauert und/oder nicht mit der gleichgroßen Drehzahl wie bei der regulären Drehrichtung erfolgt, kann zu schädlichen Folgen für die Dichtung der Welle durch einen stark erhöhten Verschleiß der Gleitdichtflächen oder der Förderung der Leckage in einer unerwünschten Richtung führen.

In besonderem Maße sind gasgeschmierte Gleitringdichtungen schon bei einer kurzzeitigen Umkehr der Drehrichtung der Gefahr einer Zerstörung ausgesetzt. Derartige Gleitringdichtungen weisen in einer der beiden Gleitdichtflächen von dem den höheren Druck aufweisenden Raum ausgehende Fördernuten auf, welche beim Wellenumlauf in der ersten, regulären Drehrichtung Gas zwischen die Gleitdichtflächen pumpen, so daß ein die Gleitdichtflächen trennendes Gasdruckpolster aufgebaut wird. In der umgekehrten Drehrichtung ziehen diese Fördernuten das gasförmige Medium aus dem Dichtspaltbereich ab bzw. sind zumindestens nicht in der Lage, die Gasdruckpolster aufzubauen. Hierdurch tritt eine unmittelbare Berührung der Gleitdichtflächen auf, wodurch die Reibung stark ansteigt und die Gleitflächen in kürzester Frist zerstört werden. Es wurde zwar versucht, durch eine besondere Wahl der Nutenform, insbesondere eine symmetrische Ausbildung der Nuten in Bezug auf durch die Drehachse gelegte Radialen den Aufbau von Druckpolstern in beiden Drehrichtungen zu ermöglichen. Gasgeschmierte Gleitringdichtungen mit derartigen Fördernuten erlauben aber auch beim Betrieb in der regulären Drehrichtung nicht den Aufbau ausreichender Gasdruckpolster bzw. weisen im regulären Betrieb eine zu hohe Leckage auf.

Aufgabe der Erfindung ist es, eine Dichtung der eingangs genannten Art so weiterzubilden, daß beim Umlauf der abzudichtenden Welle in der regulären Drehrichtung die Dichtung hinsichtlich eines optimalen Betriebsverhaltens gestaltet werden kann und beim Betrieb in der umgekehrten Drehrichtung keine schädlichen Folgen auftreten.

Erfindungsgemäß wird diese Aufgabe dadurch gelöst, daß wenigstens eines der Dichtungsglieder auf einem Lager drehbar angeordnet ist, dessen Achse der Welle entspricht, daß die drehmomentübertragende Einrichtung jedes derartigen drehbar angeordneten Dichtungsgliedes als Freilauf (drehrichtungsabhängige Kupplung) ausgebildet ist, der bei Umlauf der Welle in der ersten Drehrichtung im Sinne einer Drehmomentübertragung kuppelt und in der zweiten Drehrichtung entkuppelt und daß jede einem mit einem Freilauf ausgestatteten Dichtungsglied zugeordnete Hilfsdichtungsanordnung eine dynamische Dichtungseinrichtung enthält, welche wenigstens für begrenzte Zeit eine relative Drehbewegung aufnehmen kann und den durch den Freilauf und das Lager geschaffenen Leckageweg abdichtet.

Weitere Merkmale und Vorteile der Erfindung gehen aus den Unteransprüchen und der folgenden Beschreibung von Ausführungsbeispielen der Erfindung hervor. In den Zeichnungen zeigt:

Fig. 1 einen Längsschnitt durch den oberen Teil einer erfindungsgemäß ausgebildeten gasgeschmierten Gleitringdichtung in einfach wirkender Anordnung;

Fig. 2 eine teilweise Draufsicht auf die mit Fördernuten versehene Gleitdichtfläche der Gleitringdichtung gemäß Fig. 1 in verkleinertem Maßstab;

Fig. 3 einen Längsschnitt durch den oberen Teil einer erfindungsgemäß ausgebildeten gasge- schmierten Gleitringdichtung in Tandem-Anord- nung;

Fig. 4 einen Längsschnitt durch den oberen Teil einer erfindungsgemäß ausgebildeten gasgeschmierten Gleitringdichtung in doppelt wirkender Anordnung;

Fig. 5 einen Längsschnitt durch den oberen Teil einer erfindungsgemäß ausgebildeten einfach wirkenden Gleitringdichtung, deren Freilauf durch eine zusätzliche gasgeschmierte Gleitringdichtung gebildet ist ;

Fig. 6 einen Teil-Längsschnitt durch eine Modifikation der Ausführungsform gemäß Fig. 5.

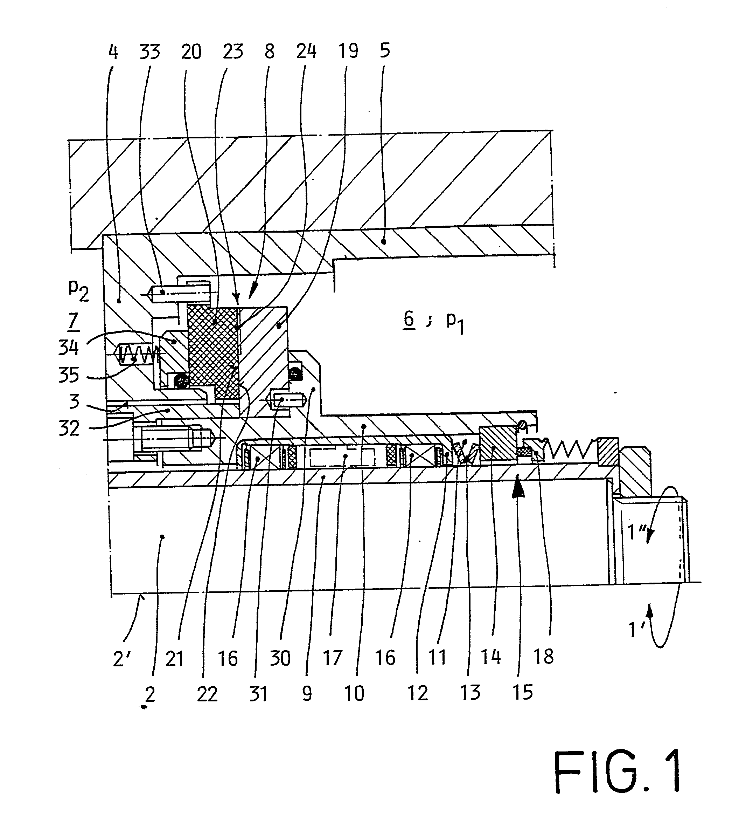

Die in Fig 1 veranschaulichte Dichtung dient zur Abdichtung einer im regulären Betrieb in einer ersten Drehrichtung 1' um ihre Achse 2' umlaufenden Welle 2, die durch die Öffnung 3 einer Wandung 4 hindurchgeführt ist. Diese Wandung 4, welche einen Bestandteil eines Dichtungsgehäuses 5 bildet, trennt einen Gas unter einem höheren Druck $p_1$ enthaltenden Raum 6, z. B. die Hochdruckseite eines Turbokompressors, von einem niedrigeren Druck $p_2$ aufweisenden Raum 7, z. B. die freie Atmosphäre. Zur Abdichtung der Welle 2 in der genannten regulären Drehrichtung 1' dient die in ihrer Gesamtheit mit 8 bezeichnete Dichtungsbaugruppe.

Eine auf der Welle 2 feste und gegen diese abgedichtete Wellenhülse 9 ist von einer Zwischenhülse 10 umgeben, welche anschließend an dem den niedrigeren Druck aufweisenden Raum 7 einen radial nach innen bis nahe an die Wellenhülse vorstehenden Innenbund aufweist, an den sich ein im Durchmesser größerer erster zylindrischer Bohrungsabschnitt anschließt, welcher wiederum über eine Innenschulter in einen im Durchmesser noch- mals vergrößerten zweiten zylindrischen Bohrungs- abschnitt übergeht, welcher dem den größeren Druck aufweisenden Raum 6 benachbart ist. In dem vom ersten Bohrungsabschnitt und der Wellenhülse 9 begrenzten Ringraum 11 ist ein im Querschnitt U-förmiger Blechkäfig 12 angeordnet, der sich mit seiner einen Stirnseite an dem Innenbund ab stützt, mit seinem Außenumfang kraftschlüssig am ersten Bohrungsabschnitt gehalten ist und an seiner zweiten Stirnseite der Vorspannung von Tellerfedern 13 ausgesetzt ist, welche sich wiederum an einem Gegenring 14 einer nachfol- gend noch erläuterten dynamischen Dichtungsein- richtung 15 abstützen.

Der Blechkäfig 12 enthält benachbart zu jedem seiner axialen Enden ein Wälzlager 16, das die Zwischenhülse 10 drehbar auf der Wellenhülse 9 lagert.

Zwischen den beiden Wälzlagern 16 befindet sich ein Klemmrollen-Freilauf 17, der so ausgebildet ist, daß beim Umlauf der Welle 2 in der dem regulären Betrieb entsprechenden ersten Drehrichtung 1' eine Drehmomentübertragung erfolgt, d.h. daß die Zwischenhülse 10 von der Wellenhülse 9 und damit von der Welle 2 mitgenommen wird, während sich in der entgegengesetzten Drehrichtung 1" die Welle frei bezüglich der Zwischenhülse drehen kann. Diese Zwischenülse 10 ist gegenüber der Wellenhülse 9 mittels der bereits erwähnten dynamischen Dichtungseinrichtung 15 abgedichtet, welche als Gleitringdichtung ausgebildet ist, deren Gegenring 14 kraftschlüssig in dem zweiten Bohrungsabschnitt der Zwischenhülse 10 gehalten ist, in beiden axialen Richtungen durch die Innenschulter bzw. einen Inneneinsprengring zusätzlich gehalten ist und mit radialem Spiel die Wellenhülse 9 umgibt. An diesem Gegenring 14 liegt ein Gleitring 18 an, welcher mit der Welle 2 umläuft und gegen die Wellenhülse 9 mittels eines Metallfaltenbalges abgedichtet ist, der auch als Anpressfeder und zur Drehmomentübertragung dient. Diese dynamische Dichtungseinrichtung 15 braucht nur für die begrenzte Beanspruchungszeit ausgelegt zu werden, für welche die Welle 2 entgegengesetzt zur regulären Drehrichtung 1' umläuft und kann entsprechend den vorgegebenen Einsatzbedingungen auch durch eine Dichtung anderer Bauart, beispielsweise eine Lippendichtung ersetzt werden.

Die beim Betrieb in der regulären Drehrichtung 1' die relative Drehbewegung aufnehmende Dichtungsbaugruppe 8 ist durch eine gasgesperrte Gleitringdichtung gebildet, welche als erstes Dichtungsglied 19 einen Gegenring enthält, der in der erwähnten ersten Drehrichtung der Welle 2 mit dieser über den Freilauf 17 gekuppelt ist und welche als zweites Dichtungsglied 20 einen Gleitring enthält, der drehfest an der Wandung 4 gehalten ist. Die beiden Dichtungsglieder 19, 20 besitzen in zur Achse 2' lotrechten Ebenen gelegene Gleitdichtflächen 21 bzw. 22, mit denen sie unter Bildung eines Dichtspaltes 23 aneinanderliegen.

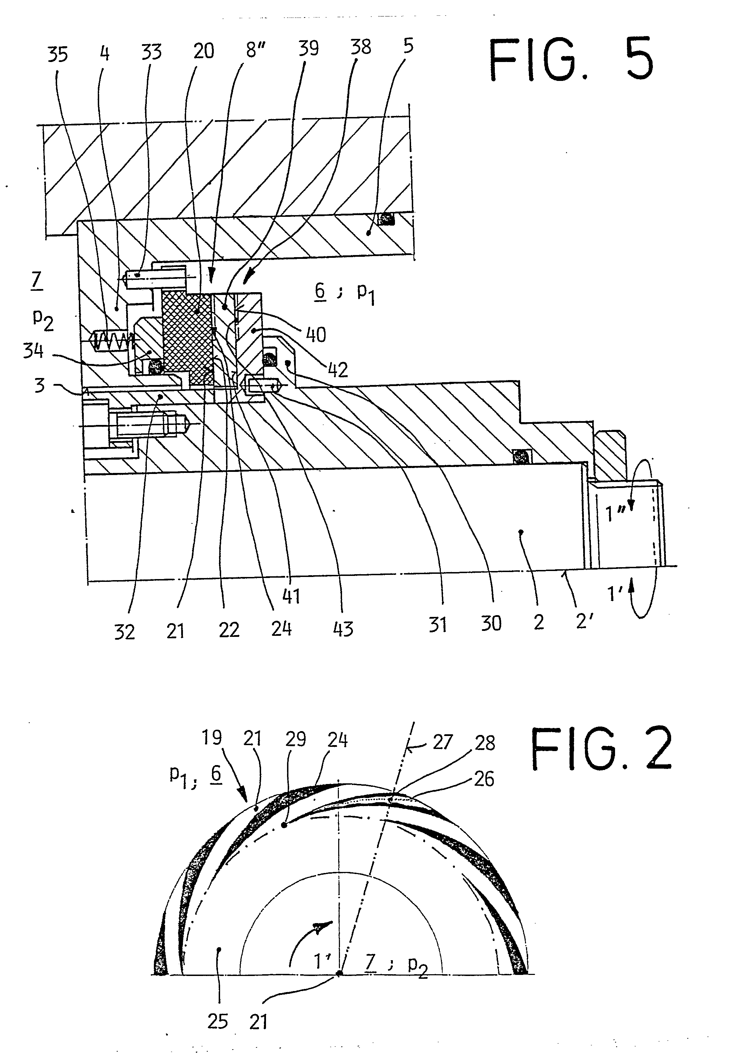

Wie in Fig. 2 veranschaulicht, sind in die Gleitdichtfläche 21 des ersten Dichtungsgliedes 19 (Gegenring) Fördernuten 24 eingearbeitet, welche in gleichen Winkelabständen zueinander angeordnet sind und von dem den höheren Druck $p_1$ aufweisenden Raum 6 ausgehen, jedoch nicht bis zu dem den kleineren Druck $p_2$ aufweisenden Raum 7 durchgehen, so daß angrenzend an letzteren Raum eine ringförmige Zone 25 im Bereich des Dichtspaltes 23 verbleibt, innerhalb der in den Gleitdichtflächen 21,22 keine Nuten vorhanden sind.

Die zwischen den beiden seitlichen Begrenzungen jeder Fördernut 24 gelegene Mittellinie 26 weist bezüglich Radialen, die durch die Wellenachse 2' gelegt sind, eine Neigung auf und folgt wenigstens näherungsweise einer Kreislinie. Für spezielle Anwendungsfälle können die Fördernuten 24 an Stelle im Gegenring auch in der Gleitdichtfläche 22 des Gleitrings 20 angeordnet sein. In jedem Fall, und zwar auch bei einer (nicht veranschaulichten) modifizierten Ausführungsform mit Innenbeaufschlagung der Dichtungsglieder 19, 20, ist die Neigungsrichtung der Mittellinie 26 so zu wählen, daß ein Punkt 28, in dem sich diese Mittellinie mit einer gedachten, an der anliegenden anderen nutenlosen Gleitdichtfläche festen und durch die Wellenachse 2' gelegten Geraden 27 schneidet, beim Umlauf der Welle 2 in der regulären Drehrichtung 1' vom offenen Nutenende zu dem geschlossenen Nutenende 29 wandert, an welches die ringförmige Zone 25 angrenzt.

Das erste Dichtungsglied 19 (Gegenring), welches im wesentlichen die Form eines Kreisringes mit rechteckigem Querschnitt aufweist, ist mit seiner Bohrung auf die Zwischenhülse 10 aufgeschoben und stützt sich mit der von seiner Gleitdichtfläche 21 abgekehrten Rückseite gegen einen von der Zwischenhülse radial nach außen vorstehenden Kragen 30 ab und ist gegen diesen mittels eines O-Ringes abgedichtet, welcher in einer Ringnut dieses Kragens angeordnet ist. Zur Drehmomentübertragung ist ein achsparalleler Stift 31 vorgesehen, welcher in Bohrungen des Kragens 30 und des ersten Dichtungsgliedes 19 einsteht. Zur weiteren Lagesicherung und Verbesserung der Drehmoment übertragung dient eine Anpresshülse 32, welche mit einem Abschnitt ihrer Länge auf die Zwischenhülse 10 aufgeschoben ist, stirnseitig gegen eine radial nach innen gerichtete Verlängerung der Gleitdichtfläche 21 des ersten Dichtungsgliedes 19 drückt und am anderen Ende mit einem radial nach innen vorstehenden Kragen die Zwischenhülse 10 stirnseitig übergreift und an dieser Stelle mit der Zwischenhülse verschraubt ist.

Von der Wandung 4 des Dichtungsgehäuses 5 steht im Bereich der Öffnung 3 ein rohrförmiger Kragen in Richtung auf den Raum 6 vor. Auf diesem Kragen ist das zweite Dichtungsglied (Gleitring) 20 mit seiner gestuft ausgebildeten Bohrung in Axialrichtung verschieblich gelagert. An seiner von der Gleitdichtfläche 22 abgewandten Rückseite liegt ein ebenfalls den Kragen 30 umgebendes ringförmiges Druckstück 34 an, das unter der Vorspannung von in Sacklochbohrungen der Wandung 4 gehaltenen Federn 35 steht. Ein in einer Innenschulter des Druckstücks 34 gehaltener O-Ring dichtet das zweite Dichtungsglied 20 gegenüber dem Kragen ab. Ein achsparaller Stift 33 dient der Drehmomentübertragung vom zweiten Dichtungsglied 20 zur Wandung 4.
Beim Umlauf der Welle 2 in der ersten, regulären Drehrichtung 1' überträgt der Freilauf 17 das Drehmoment von der Welle zum ersten Dichtungsglied 19, so daß die Dichtungsbaugruppe 8 wie eine übliche gasgeschmierte Gleitringdichtung arbeitet.

Dabei findet zwischen dem Gegenring 14 und dem Gleitring 18 der dynamischen Dichtungseinrichtung 15 keine relative Drehbewegung statt, so daß diese Bauteile keinem Verschleiß ausgesetzt sind und auch keine zusätzliche Reibungsleistung verursachen. Läuft die Welle 2 in der entgegengesetzten Drehrichtung 1'' um, so entkuppelte der Freilauf 17, so daß eine Drehmomentübertragung von der Welle 2 zum ersten Dichtungsglied 19 unterbleibt und die Gleitdichtflächen 21, 22 vor einer Beschädigung geschützt sind. Die relative Drehbewegung wird in diesem Fall von der dynamischen Dichtungseinrichtung 15 aufgenommen.

Bei der nachfolgenden Beschreibung weiterer Ausführungsbeispiele der Erfindung sind für gleiche oder gleichwirkende Bauteile übereinstimmende Bezugszeichen verwendet, gegebenenfalls ergänzt durch Indizes. Die Erläuterung dieser Bauteile kann daher aus der vorstehenden Beschreibung des ersten Ausführungsbeispiels entnommen werden.

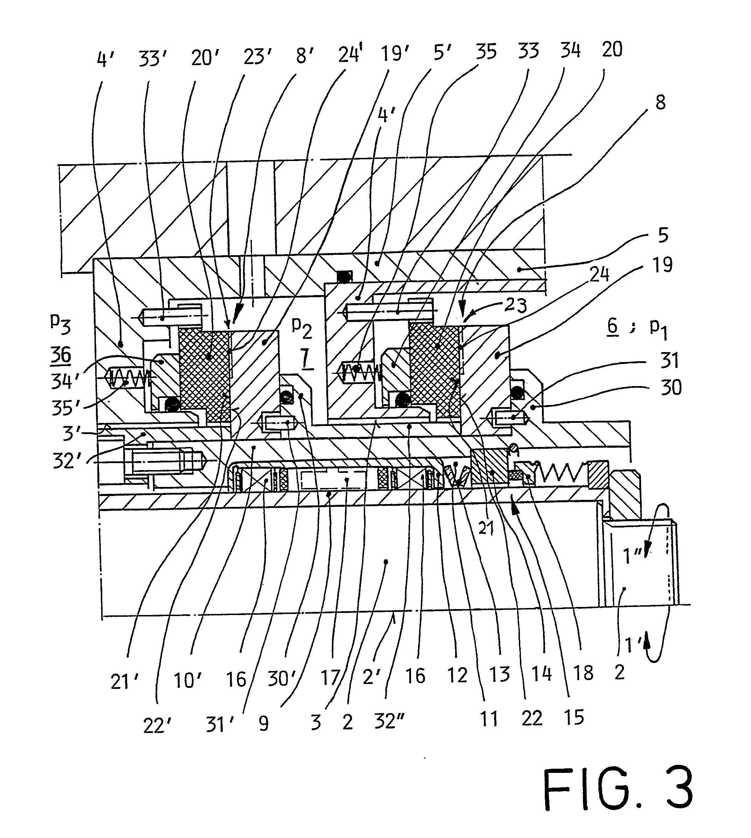

Das in Fig. 3 veranschaulichte zweite Ausführungsbeispiel betrifft eine gasgeschmierte Gleitringdichtung in Tandem-Anordnung. Dementsprechend sind zwei Dichtungsbaugruppen 8, 8' vorhanden, welche Wandungen 4, 4' gegenüber der Welle 2 bzw. der Zwischenhülse 10 abdichten. Demgemäß liegt auch ein weiterer Raum 36 mit einem Druck $p_3$ vor, wobei sich die gesamten Druckverhältnisse zu $p_1 > p_2 > p_3$ darstellen. Die ersten Dichtungsglieder (Gegenringe) der beiden Dichtungsbaugruppen sind unter Einfügung eines mit einem radial nach außen vorstehenden Kragen 30' und einem darin eingelegten O-Ringes ausgestatteten Distanz-Anpresshülse 32'' auf der gemeinsamen Zwischenhülse 10' angeordnet, so daß alle Gleitdichtflächen bei Umlauf der Welle 2 in einer Drehrichtung 1'' entgegengesetzt zur regulären Drehrichtung gegen eine Zerstörung geschützt sind.

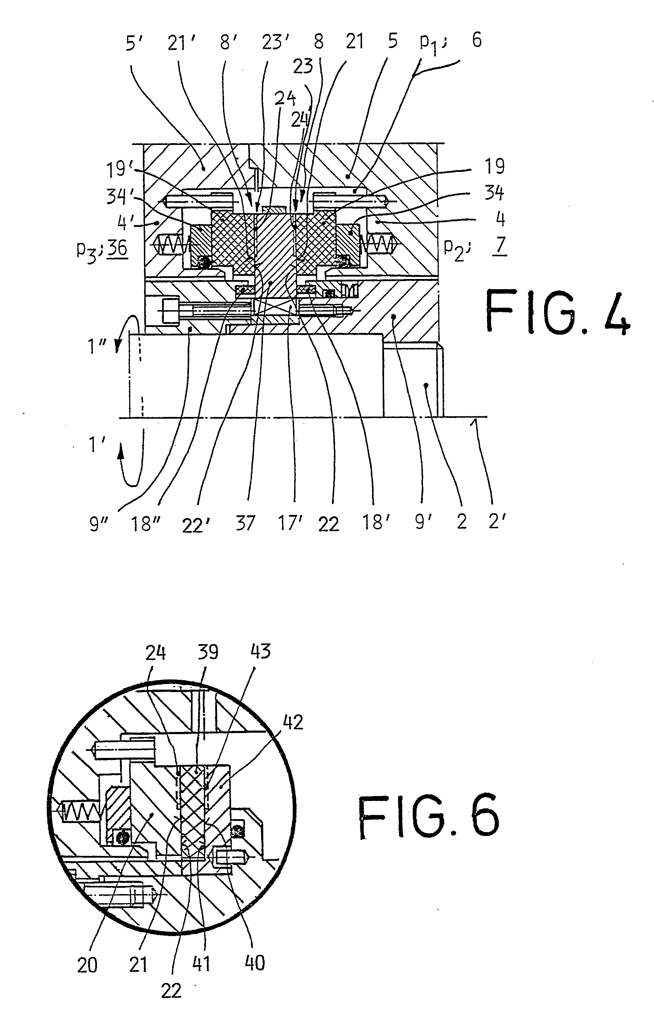

Das in Fig. 4 veranschaulichte dritte Ausführungsbeispiel veranschaulicht eine gasgeschmierte Gleitringdichtung in doppeltwirkender Anordnung. Unter Beachtung der in der Zeichnung dargestellten Räume gilt für die Druckaufteilung wiederum $p_1$ (Raum 6) $> p_2$ (Raum 7) $> p_3$ (Raum 36). Die beiden ersten Dichtungsglieder sind zu einem gemeinsamen ringscheibenförmigen Körper 37 zusammengefaßt, welcher auf jeder axialen Stirnseite eine Gleitdichtfläche 21, 21' aufweist, die beide radial nach innen verlängert sind und benachbart zur Bohrung dieses Körpers auch als Gleitdichtflächen für die Gleitringe 18', 18'' der dynamischen Dichtungseinrichtung dienen. Die beiden Gleitringe 18', 18'' sind jeweils in einem Teil der geteilt ausgebildeten Wellenhülse 9', 9'' gehalten, wobei der eine Gleitring 18' in Axialrichtung federnd abgestützt ist. Beide Gleitringe 18', 18'' bestimmen auch die axiale Lage des Körpers 37. Die Bohrung des Körpers 37 bildet die eine Kupplungsfläche des Freilaufes 17', welcher gleichzeitig auch die radiale Lage dieses Körpers bestimmt. Die Fördernuten 24, 24' sind so ausgebildet, wie es an früherer Stelle im Zusammenhang mit den Fig. 1 und 2 erläutert wurde, d.h. jeweils bezogen auf Draufsichten, weisen die Fördernuten 24 und 24' entgegengesetzte Neigungen zu Radialen durch die Drehachse 2' auf.

Bei einer (nicht dargestellten) vereinfachten Ausführungsform der Dichtungen gemäß den vorstehend erläuterten Ausführungsformen kann der Freilauf 17 bzw. 17' entfallen oder durch ein Gleit- oder Wälzlager ersetzt sein, wobei dann die Anpresskraft der dynamischen Dichtungseinrichtungen 15, 15', 15" so groß zu bemessen ist, daß diese durch Reibung eine schlupflose Verbindung bis zu einem Drehmoment herstellen, das geringfügig größer als das im regulären Betrieb bei Umlauf der Welle in der ersten Drehrichtung 1' auftretende maximale Drehmoment ist, während bei Überschreitung dieses Drehmoment ein Schlupf eintritt. Wenn sich daher die Gleitflächen 21 bzw. 21' durch die Wirkung der Fördernuten 24 bzw. 24' beim Betrieb in der zweiten Drehrichtung 1" an den damit zusammenwirkenden Gegen-Gleitflächen "festsaugen" (an Stelle wie in der ersten Drehrichtung 1' Druckpolster auszubilden), wird die relative Drehbewegung zwischen der Welle und den Wandungen 4, 4' vom Schlupf der dynamischen Dichtungseinrichtung 15 bzw. 15' bzw. 15" aufgenommen und die betriebsmäßig verwendeten Gleitdichtflächen vor einer übermäßigen Beanspruchung geschützt.

Bei dem in Fig. 5 veranschaulichten vierten Ausführungsbeispiel wird der Freilauf von einer zusätzlichen gasgeschmierten Gleitrindichtung 38 gebildet, welche gleichzeitig auch die Funktionen der in der Hilfsdichtungsanordnung enthaltenen dynamischen Dichtungseinrichtung und des Lager übernimmt. Zu diesem Zweck ist ein in Form einer Ringscheibei ausgebildeter Ringkörper 39 vorgesehen, der in schwimmender Anordnung die Wellenhülse 9 umgibt und auf seiner einen axialen Stirnseite die mit Fördernuten 24 versehene Gleitdichtfläche 21 trägt, welche zusammen mit der von Nuten freien Gleitdichtfläche 22 einen Bestandteil der im regulären Betrieb wirksamen Dichtungsbaugruppe 8" bildet. Auf der anderen axialen Stirnseite des Ringkörpers 39 befindet sich eine Gleitdichtfläche 40, welche mit einer Gleitdichtfläche 41 zusammenwirkt, die an einem drehfest an der Wellenhülse 9 gehaltenen und gegen diese abgedichteten Bauteil 42 ausgebildet ist und Fördernuten 43 besitzt. Im Falle der in Fig. 5 veranschaulichten Ausführungsform, bei der sich die Nuten 24, 43 in den Gleitdichtflächen des Ringkörpers 39 bzw. des Bauteils 42 befinden, weisen die Mittellinien dieser

Nuten entgegengesetzt gerichtete Neigungen zu durch die Wellenachse gelegten Radialen auf. Die Nuten könnten aber auch in den jeweils anderen von zwei miteinander zusammenwirkenden Gleitdichtflächen angeordnet sein und es könnten auch die betriebsmäßig wirksame Dichtungsbaugruppe 8" und die zusätzliche gasgeschmierte Gleitringdichtung 38 in ihrer axialen Aufeinanderfolge vertauscht sein. Generell gilt dabei, daß die Fördernuten der betriebsmäßig wirksamen, d.h. bei Umlauf der Welle in der ersten Drehrichtung 1' für die Ausübung der Dichtungsfunktion bestimmten Dichtung so auszubilden und anzuordnen sind, wie es im Zusammenhang mit den Fig. 1 und 2 erläutert wurde, während die Fördernuten der (den Freilauf ersetzenden) zusätzlichen gasgeschmierten Gleitringdichtung in ihrer Neigungsrichtung zu Radialen entgegengesetzt zu dieser Vorschrift anzorden sind.

Gemäß einerin Fig. 6 dargestellten Modifikation nach Fig. 5 enthält keine der beiden Gleitdichtflächen 21, 40 des aus einem weichen Werkstoff, beispielsweise Kohle, bestehenden Ringkörpers 39 Fördernuten. Ein erster Satz von Fördernuten 43 ist (wie im Falle Fig. 5) in der Gleitfläche 41 des aus hartem Werkstoff, beispielsweise Siliciumkarbid, bestehenden Bauteils 42 ausgebildet und ein zweiter Satz Fördernuten 24 in der Gleitfläche 22 der ebenfalls aus hartem Werkstoff bestehenden Gleitrings 21 ausgebildet. Gesehen in einer Projektion auf einer zur Achse 2' lotrechten Ebene, weisen die Mittellinien der Fördernuten 24, 43 Neigungen in gleicher Richtung auf.

## Ansprüche

1. Dichtung für eine im regulären Betrieb in einer ersten Drehrichtung (1') umlaufenden Welle (2), welche durch eine Wandung (4; 4') geführt ist, die einen Raum höheren Drucks von einem Raum niedrigeren Drucks trennt, mit wenigstens einer in der ersten Drehrichtung (1') die Dichtfunktion übernehmenden Dichtungsbaugruppe (8; 8'), umfassend jeweils einerseits ein erstes Dichtungsglied (19; 19'), das an der Welle (2) oder einem daran festen Bauteil (9) in Radialrichtung und in mindestens einer Axialrichtung abgestützt ist, mit der Welle (2) bzw. dem Bauteil (9) über eine erste drehmomentübertragende Einrichtung verbunden ist und gegen die Welle (2) durch eine erste Hilfsdichtungsanordnung abgedichtet ist und andererseits ein zweites Dichtungsglied (20; 20'), das an der Wandung (4; 4') oder einem daran festen Bauteil in Radialrichtung und in mindestens einer Axialrichtung abgestützt ist, mit der Wandung (4; 4') bzw. dem Bauteil über eine zweite drehmomentübertragende Einrichtung verbunden ist und gegen die Wandung (4; 4') bzw. das Bauteil durch eine zweite Hilfsdichtungsanordnung abgedichtet ist, wobei die beiden Dichtungsglieder (19, 20; 19', 20') an einem die relative Drehbewegung aufnehmenden Dichtspalt (23; 23') unmittelbar oder über eine trennende dünne Mediumsschicht aneinanderliegen, **dadurch gekennzeichnet,** daß wenigstens eines der Dichtungsglieder (19; 19'; 37) auf einem Lager (16) drehbar angeordnet ist, dessen Achse der Achse (2') der Welle (2) entspricht, daß die drehmomentübertragende Einrichtung jedes derart drehbar angeordneten Dichtungsgliedes als Freilauf (drehrichtungsabhängige Kupplung (17; 17') ausgebildet ist, der bei Umlauf der Welle (2) in der ersten Drehrichtung (1') im Sinne einer Drehmomentübertragung kuppelt und in der zweiten Drehrichtung (1'') entkuppelt und daß jede Hilfsdichtungsanordnung, die einem mit einem Freilauf (17; 17') ausgestattem Dichtungsglied (19; 19'; 37) zugeordnet ist, eine dynamische Dichtungseinrichtung (15; 15'; 15'') enthält, welche wenigstens für begrenzte Zeit eine relative Drehbewegung aufnehmen kann und den durch den Freilauf (17; 17') und das Lager (16) geschaffenen Leckageweg abdichtet.

2. Dichtung nach Anspruch 1, **dadurch gekennzeichnet,** daß die Dichtungsgruppe (8; 8'; 8'') eine gasgeschmierte Gleitringdichtung enthält, daß diese ein Dichtungsglied (20;.20') mit einer ebenen Gleitdichtfläche (22; 22') aufweist, sowie ein anderes Dichtungsglied (19; 19'; 37) aufweist, das in seiner über den Dichtspalt (24; 23') daran anliegenden Gleitdichtfläche (21; 21') Fördernuten (24; 24') enthält, welche von dem den höheren Druck ($p_1$) aufweisenden, ein Gas enthaltenden Raum (6) ausgehen und vor Erreichung des anderen Raumes (7) mit dem niedrigeren Druck ($p_2$) endigen, geneigt zu durch die Wellenachse (2') gelegten Radialen verlaufen und bei einem Wellenumlauf in der ersten Drehrichtung (1') Gas zwischen die beiden Gleitdichtflächen (21, 22; 21', 22') pumpen und deren Trennung bewirkende Druckpolster aufbauen.

3. Dichtung nach Anspruch 1, **dadurch gekennzeichnet,** daß die in der Hilfsdichtungsanordnung enthaltene dynamische Dichtungseinrichtung (15) aus einer Gleitringdichtung (14, 18) besteht.

4. Dichtung nach Anspruch 1, **dadurch gekennzeichnet,** daß die Welle (2) bzw. eine von ihr getragene Wellenhülse (9) von einer mittels des Lagers (16) darauf drehbar gelagerten Zwischenhülse (10) umgeben ist und daß der Freilauf (17) in einem zwischen der Welle bzw. Wellenhülse und der Zwischenhülse freigelassenen Ringraum (11) angeordnet ist.

5. Dichtung nach Anspruch 1 oder 4, mit mehreren Dichtungsbaugruppen in doppelt wirkender oder Tandem-Anordnung, **dadurch gekennzeichnet,** daß die ersten Dichtungsglieder (19; 19') jeder Dichtungsbaugruppe (8; 8') auf einer gemeinsamen Zwischenhülse (10) drehfest gelagert sind.

6. Dichtung nach Anspruch 1, mit zwei Dichtungsbaugruppen in doppelt wirkender Anordnung, **dadurch gekennzeichnet,** daß die ersten Dichtungsglieder der beiden Dichtungsbaugruppen (8 ; 8') zu einem gemeinsamen Bauteil zusammengefasst sind, das als einstückiger, ringscheibenförmigen Körper (37) ausgebildet, dessen Bohrung eine Kupplungsfläche des Freilaufes (17') bildet.

7. Dichtung nach Anspruch 2, **dadurch gekennzeichnet,** daß der Freilauf und die in der diesem zugeordneten Hilfs dichtungsanordnung enthaltene dynamische Dichtungseinrichtung durch eine zusätzliche gasgeschmierte Gleitringdichtung (38) gebildet sind, deren Fördernuten (43) so gestaltet und angeordnet sind, daß sie bei einem Wellenumlauf in der zweiten Drehrichtung (1'') Gas zwischen die Gleitflächen (40, 43) dieser zusätzlichen gasgeschmierten Gleitringdichtung pumpen.

8. Dichtung nach Anspruch 7, **dadurch gekennzeichnet,** daß je eine Gleitdichtfläche (21; 40) der gasgeschmierten Gleitringdichtung und der zusätzlichen gasgeschmierten Gleitringdichtung (38) an einem koaxial zur Achse (2') der Welle (2) angeordneten und um diese Achse drehbaren Ringkörper (39) ausgebildet sind.

9. Dichtung nach Anspruch 8, **dadurch gekennzeichnet,** daß der Ringkörper (39) eine Ringscheibe ist, welcher auf ihren axial gegenüberliegenden Seiten je eine Gleitdichtfläche (21; 40) aufweist, von denen eine (21) in einer ersten Richtung zu Radialen durch die Achse (2') geneigten Fördernuten (24) aufweist und über den Dichtspalt an einer von Fördernuten freien, bezüglich der Wandung (4) drehfesten Gleitdichtfläche (22) anliegt und von denen die andere, von Fördernuten freie Gleitdichtfläche (40) über einen Dichtspalt an einer bezüglich der Welle (2) drehfesten Gleitdichtfläche (41) anliegt, welche in eine zweite, entgegengesetzte Richtung geneigte Fördernuten (43) aufweist.

10. Dichtung nach Anspruch 1, 2 oder 3, **dadurch gekennzeichnet,** daß der Freilauf durch eine das übertragene Drehmoment begrenzende Reibungskupplung ersetzt ist, welche so dimensioniert ist, daß sie eine praktisch schlupflose Verbindung bis zu einem Drehmoment bewirkt, das geringfügig größer als das im regulären Betrieb bei Umlauf der Welle (2) in der ersten Drehrichtung (1') auftretende maximale Drehmoment ist und daß sie bei Überschreitung dieses Drehmoments eine relative Drehbewegung zuläßt.

11. Dichtung nach Anspruch 10, **dadurch gekennzeichnet,** daß die Reibungskupplung durch eine in der Hilfsdichtungsanordnung enthaltene dynamische Dichtungseinrichtung gebildet ist.

FIG. 1

# FIG. 5

35  4  33  20  8"  39  38  5

7

p₂

6 ; p₁

40

34

42

3

41

32  21  22  24  43  31  30  2  2'

1"

1'

# FIG. 2

19  21  29  24  27  28

p₁ ; 6

26

1'  7 ; p₂

25  21

FIG. 3

FIG. 4

FIG. 6